# EUROPEAN PATENT SPECIFICATION

(11) **EP 3 021 101 B1**
(45) Date of publication and mention of the grant of the patent: **25.03.2020**
(21) Application number: 14461588.7
(22) Date of filing: 13.11.2014
(51) Int. Cl.: G01M 3/26, G01M 3/28

(54) **Apparatus and method for monitoring of hollow engineering structures**
Vorrichtung und Verfahren zur Überwachung von hohlen Ingenieursstrukturen
Appareil et procédé pour surveiller des structures de génie civile creuses

(43) Date of publication of application: 18.05.2016
(73) Proprietor: Federal Institute for Materials Research and Testing (BAM), 12205 Berlin (DE); Technologiekontor Bremerhaven GmbH, 27570 Bremerhaven (DE); Feller, Oliver, 20259 Hamburg (DE)
(72) Inventor: Feller, Oliver, 20259 Hamburg (DE); Stolinski, Marek, 30-702 Kraków (PL); Thoens, Sebastian, 12205 Berlin (DE); Lueddecke, Falk, 27570 Bremerhaven (DE)
(74) Representative: Zimmermann & Partner Patentanwälte mbB

(56) References cited:
- EP-A1- 0 415 848
- WO-A1-2009/065174
- WO-A1-2009/065175
- FR-A1- 2 384 251
- US-A- 4 104 906
- US-A1- 2002 092 355
- US-A1- 2011 135 468
- US-A1- 2012 099 398

## Description

The present invention relates to the structural health monitoring of civil engineering structures, especially to continuous monitoring of hollow structures, elements or members of such structures. It is based on the so called flooded member detection (FMD).

Civil engineering structures typically are subjected to wear, in particular, to periodic stress. A surface crack which typically occurs under fatigue load in the case of hollow structures, moreover in the case of, e.g., bridges, flyovers, overpasses, stilts, stadiums, towers, offshore grounding structures like monopoles or tripods, can develop into a trough thickness crack (TTC). Growing TTCs may quickly cause further damage and even destruction. Therefore, monitoring and early detection of trough thickness cracks can help to prevent damage and economical loss. Therein, under a civil engineering structure we consider any artificial structure designed and/or built by applying technical knowledge and engineering skills. Examples of such structures comprise a treatment plant; a power plant; a tower; a cooling tower; a lock construction; any housing or industrial construction; a building construction; a cinema; a stadium; a pavilion; a bridge; an overpass; a flyover; an elevated guideway; a grounding thereof; an off-shore grounding of a wind generator or the like; a substation or wind turbine jacket; a scaffold; a scaffolding; a substructure; a groundwork; a fundament; a base; a double bottom; a double hull; a pontoon or floating wind turbine support structure; a truss, e.g. flat-chord truss; a stilt or support element for any industrial equipment or platform.

Widely accepted non-destructive detection techniques and methods have been established for structural health monitoring of civil engineering structures. For instance, in the natural oil and gas industry detection techniques based on x-ray and ultrasonic are established. In other areas of structural health monitoring thermographic methods are widely spread and recognized. Nonetheless, not each and every monitoring method can be used in a cost- and time-effective manner directly in a different industry, e.g. such which recently are expanding, e.g., into coastal and off-shore regions.

US 4 104 906 A describes an early crack detection with a multi pressure system. US 2002/092855 A1 describes a self-monitoring method and apparatus for condition monitoring of a structure. FR 2 384 251 A1 describes a method and apparatus for early detection of cracks of elements subject to important constraints. WO 2009/065175 A1 describes a differential comparative pressure monitoring system. WO 2009/065174 A1 describes a comparative pressure monitoring instrument. EP 0 415 848 A1 describes a method for monitoring flexible tubular cables and pipes during operation and acoustical pickup to implement this method. US 2012/099398 A1 describes remote flooded member detection. US 2011/135468 A1 describes systems and methods for monitoring a structural health of a wind turbine.

In view of the above a method for long term monitoring of a hollow structure is suggested according to claim 1, a method for maintaining a hollow structure is suggested according to claim 12, using the method of claims 1- 11 is suggested according to claim 13, an apparatus for these methods is suggested according to claim 14; and using the method of claim 12 is suggested according to claim 21. Further embodiments, modifications and improvements arise from the following description, figures and claims.

According to an embodiment a method for long-term monitoring of a civil engineering structure is suggested, wherein the civil engineering structure comprises at least one hollow element comprising an internal closed compartment. The suggested method comprises:
- establishing an internal fluidic pressure in the one compartment;
- monitoring the internal fluidic pressure in order to detect a change of the internal fluidic pressure indicating a through thickness crack in the compartment,
wherein long term monitoring comprises monitoring over at least two weeks, preferably over 1 month, more preferably over 1 year, especially over periods extending five years.

Therein, establishing comprises passively measuring (i.e. detecting) a pressure which is present inside the closed compartment. That pressure can be an earlier produced, generated, or naturally occurring fluidic pressure inside the compartment. Alternatively, establishing comprises also generating, i.e. actively producing, a certain fluidic pressure (a target pressure) which is taken as the starting pressure. By setting a certain threshold pressure value, deviations from a fluidic pressure can be detected and actions can be triggered, if the measured fluidic pressure deviates by more than the threshold value from the established fluidic pressure.

Advantages of that method are e.g. its long term applicability and low costs, both for implementation and maintenance and its applicability to a wide range of civil engineering structures as indicated above, e.g. such as grounding structures, a substation or wind turbine jacket; a scaffold, a scaffolding, a substructure, a groundwork, a fundament, a base, a double bottom, a double hull, or a pontoon.

According to further embodiment the method further comprises:
- providing a pressure sensor for measuring the internal fluidic pressure and which signals are independent from ambient temperature and/or shock and
- providing a control unit which is configured to detect the change of the internal pressure value.

Advantages comprise ruggedness, reliability and advance failure detection even for a complex hollow structure, comprising multiple internal hollow compartments.

According to another embodiment the pressure of a fluid inside the compartment is measured, wherein the fluid comprises a liquid or a gas, preferably a gas, such as air or a constituent thereof.

Advantages are the easy accessibility of air and of constituents of air, such as, e.g., carbon dioxide, nitrogen, argon or others. In principle any gas can be used for pressurizing the hollow compartment. According to a modification the hollow compartment, for example in a structure like a monopile, may be filled with water. Merely the pressure of the air above the water will be established, while the hollow compartment will mainly be filled with water. Advantageously buoyancy of civil engineering structure like monopoles or tripods in an offshore region will be reduced and, hence, stability will be greatly enhanced.

According to another embodiment the monitoring comprises:
- providing a fluidic connection between the at least one compartment and the pressure sensor.

A fluidic connection is required in order to establish an internal pressure value. Otherwise no pressure could be measured.

According to an embodiment providing a fluidic connection comprises connecting the sensor directly with the internal hollow compartment or disposing the sensor inside said compartment.

Advantages comprise the direct contact between the sensor and the fluid inside the compartment. No special precautions for hermetic sealing of a connection between the sensor and the compartment are required as the sensor is placed directly within the fluid whose pressure has to be established.

According to an embodiment the step "providing a fluidic connection" comprises fluidically connecting the sensor by means of a tube, tubing, or capillary to the hollow compartment. The tube, tubing or capillary as well as any coupling or fitting ensures a fluid tight and/or gas-tight connection between the sensor and the fluid inside the compartment.

Advantageously the sensor for facilitated inspection can be located at a distance to the compartment. Fittings and/or couplings advantageously are leak proof and have a higher design operating pressure than the fluidic pressure in the hollow compartment.

According to another embodiment the method further comprises:
- providing a fastening means for the tube or tubing.

Fastening of the tube, tubing or capillary e.g. to the walls of the hollow compartment allows for shock prevention and stable measuring values over long time periods which depend only on the internal pressure.

According to an embodiment the fastening means are selected from a glue, a magnet, a solder, a weld, or a clamp.

Advantageously such types of fastening or their combination provide a reliable fixture for the tube, tubing or capillary. For instance a magnet sticks well to an iron or steel surface. Furthermore, the structural integrity of the monitored element is left intact by a magnet, by an adhesive like a glue or a suitable spring or clamp and nearly not disturbed by solder or weld. Furthermore, a tube length or even multiple tube (tubing, capillary, pipe) sections can be reliably held if a fitting, a flange or a manifold (e.g. a multiple connection manifold with connected tubes (tubing, capillaries pipes) is fastened to the engineering structure or, e.g., to the wall of its hollow internal compartment with the fastening means described above.

According to another embodiment the pressure sensor is selected from a pressure sensor such as a piezoresistive, an electromagnetic, an optical, an ionization based, a vibrating-wire, an optical, a piezoelectric, a capacitive, a thermal or a potentiometer based sensor.

Advantageously the sensor is chosen among a wide range of sensors and, hence, can be adapted to the special requirements of the special application, i.e. to the special fluid or condition.

According to a modification of that embodiment, the pressure sensor compensates changes of an ambient temperature and/or changes of an ambient pressure (e.g. an ambient daily pressure fluctuation) and/or a shock or vibration of the civil engineering structure during its normal exploitation.

Advantageously the established pressure corresponds to a real pressure inside the hollow compartment.

According to another embodiment the tube for fluidic connection is selected from a polymer or metal tube, preferably polymer tube. The tube may be selected, e.g., from polyethylene, polyvinyl chloride, polypropylene, nitrile based rubber, polyether ether ketone (PEEK), polyamide, ethylene vinyl acetate and other polymer type piping, copper piping, aluminium or a steel.

Advantages of polymer tubing and capillaries comprise the commercial availability, high reliability, corrosion resistance (e.g. coming from salt water) and/or low price.

According to another embodiment the generating an internal target pressure comprises: -providing compressing means such as a pump, a compressor or a gas container comprising a pressurized gas and/or providing evacuating means such as an evacuation pump or a vacuum pump.

Advantages of this embodiment comprise low costs for maintenance and reliability. Especially, a gas container comprising a pressurized gas equipped e.g. with an appropriate needle valve does not need further maintenance. Furthermore, advantageously different types of pumps are commercially available.

According to another embodiment the hollow structure comprises a hollow beam, a monopile, a chord which is welded to a brace, and/or a brace which is welded to a chord.

Advantageously, similar structures are quite common in civil engineering. The suggested monitoring method requires minimal maintenance costs, offers high reliability and ruggedness over long exploitation periods.

According to another embodiment the long term monitoring comprises continuous monitoring for up to 50 years.

This allows for easy monitoring at low costs between or even without additional periodic inspection.

According to another embodiment a method for maintaining a hollow structure comprising at least one internal compartment is suggested, wherein the maintaining comprises:
- Applying the method for long term monitoring according to the embodiments described above;
- Detecting a change of pressure in the at least one closed compartment which indicates a leak, wherein the leak is selected from a through thickness crack or other opening,
- Operating a pump in order to produce a fluid stream, preferably a gas stream, through the leak;
- Localizing the leak by determining rising gas bubbles and localizing their starting point; and
- Closing the leak.

Advantages comprise easy operability and low costs.

According to a further embodiment it is suggested to use the described method for monitoring of:
- a treatment plant; a power plant; a tower; a cooling tower; a lock construction; any housing or industrial construction; a building construction; a cinema; a stadium; a pavilion; a bridge; an overpass; a flyover; an elevated guideway; or a grounding thereof;
- a grounding structure, an off-shore grounding of a wind generator; a substation or a wind turbine jacket; a scaffold; a scaffolding; a substructure; a groundwork; a fundament; a base; a double bottom; a double hull; a pontoon or a floating wind turbine support structure; a truss; a flat-chord truss; a stilt or support element for any industrial equipment or platform;
- an offshore monopile, a tripod, a jacket, a wind turbine jacket substructure, a wind turbine tower, an offshore transformer substation substructure.

According to yet another embodiment of the present invention an apparatus for long term monitoring of a civil engineering structure is suggested. The civil engineering structure comprises at least one closed internal compartment. The apparatus comprises:
- a pressure sensor, adapted to measure an internal fluidic pressure of the compartment;
- a controller for recording and comparing the internal pressure with an established pressure or with a given threshold value, wherein the controller is adapted for detecting a through thickness crack in the compartment by detecting a change of the internal fluidic pressure.

Advantages correspond to the advantages indicated above and comprise the good accessibility of the components needed to configure said apparatus and the possibility to easily configure such apparatus according to any given structure.

According to a further embodiment the apparatus further comprises:
- a warning device for indicating a through thickness crack in the compartment.

Advantageously any possible leak, e.g. a through thickness crack can be easily detected, remarkably even remote from the monitored hollow structure.

According to another embodiment the apparatus further comprises:
- fastening means for fastening the tube or tubing to the hollow structure.

Such fastening means are selected in order to improve the operability of a monitoring system comprising different pressure sensors which are fluidically connected to different internal hollow compartments. Furthermore these fastening means can easily be applied and advantageously do not cause deterioration of the material structure or of any element of the hollow structure.

According to another embodiment the civil engineering structure which is monitored by an apparatus as described above is selected from off-shore and on-shore or on-land engineering structures, in particular from: a substation or wind turbine jacket; a scaffold; a scaffolding; a substructure; a groundwork; a fundament; a bridge; a tower; a base; a double bottom; a double hull; or a pontoon.

Advantages are low costs in comparison to the high costs, need e.g. for especially trained personnel or possible exposure of personnel or material to radioactivity, X-rays or ultrasonic energy as applied with known monitoring methods for off-shore structures or expensive and complicated methods like e.g. lock-in thermography.

According to another embodiment one separate sensor of the described apparatus is fluidically connected to at least two separate compartments.

Alternatively, according to yet another embodiment the at least two compartments are fluidically connected with each other and the sensor is fluidically communicating with one of them, i.e. the sensor is fluidically connected to one of them.

Advantageously the number of sensors can be reduced though the reliability of the monitoring can be improved by a redundant layout, i.e. redundant sensors.

According to another embodiment the apparatus described above further comprises fastening means for fastening the tube and/or tubing to the hollow structure, wherein fastening is selected from fastening to an inside and/or to an outside of the hollow structure, preferably fastening is selected from fastening to an inside of the hollow structure.

Advantages of fastening selected from fastening to an inside of the hollow structure comprise enhanced ruggedness of the whole system.

Furthermore, a through thickness crack detection method for a grounding structure comprising at least one internal closed compartment is suggested. It comprises:
- Establishing an internal fluidic pressure in the internal closed compartment;
- Monitoring the internal fluidic pressure over at least two weeks, preferably over 1 month, more preferably over 1 year, especially over periods extending five years;
- Detecting a change of the internal target pressure indicating a through thickness crack in the at least one closed compartment.

Advantages arise from the wide applicability of TTC detection methods in structural health monitoring.

The accompanying figures illustrate different embodiments and together with the description serve for further explanation and clarification of the principles of the present invention. The elements in the figures are shown relative to each other and are not necessarily at scale. Identical designation numbers correspond to similar elements or parts of the drawings.
- Fig. 1: shows growth several stages of a through thickness crack from the point of view of flooded member detection (FMD);
- Fig. 2: shows an exemplary configuration of the monitoring system based on the method and apparatus described herein. The configuration relates to mechanical and electrical connections between system elements.
- Fig. 3: shows an embodiment with a grounding structure to be covered by a full version of the described here monitoring system.
- Fig. 4: shows a sketch of a cross-section of K-type leg-brace connection illustrating an embodiment of the present apparatus and method;
- Fig. 5: shows a laboratory scale installation while tested for air-tightness;
- Fig. 6: shows measurement data gathered during laboratory scale system leakage tests.
- Fig. 7: shows air system valves and pressure sensors arrangement in the meaning of pneumatic connections in preferred embodiment
- Fig. 8: shows apparatus layout within structure in a preferred embodiment

Off-shore operating conditions are recognized as harsh and severe. They can be dangerous for any type of structure built in a marine environment. These harsh environmental conditions can cause damages and structural failures. The causes for structural failure can be grouped into:
- failures resulting from statistical variations in loads and structural load bearing capabilities;
- failures due to accidents;
- failures due to a human error during design, fabrication and/or operation of structures.

Each of them can be detected by FMD techniques. The main direct causes of member flooding are:
- through thickness fatigue cracks;
- cracks from weld root defects;
- accidental damage; and
- anode bracket failure causing corrosion.

A few decades ago serious fatigue driven problems related to offshore steel structures occurred because main attention was paid to the bearing capacity for static loads. Accordingly, historical records shows that through thickness fatigue cracks (TTFC) are the most common offshore structural fault which can be detected by Flooded Member Detection. The later changes in the design approach introduced special attention to fatigue design. Improved structural capacity for cycle loading was achieved but it was never entirely resolved in the meaning of whole design life of the structure. These issues are the background for Flooded Member Detection (FMD) technique and monitoring method described herein.

Flooded Member Detection is a well know inspection technique used to determine if any brace member or leg of offshore substructure has:
- any through thickness crack;
- any through thickness corrosion; or
- any leakage in non-welded structural elements connection.

FMD in a few versions is a well-known and mature inspection technique for tubular members. It is in use since the early 1980's.

It needs to be underlined that Gamma Ray and Ultrasonic FMD techniques designed for Oil and Gas industry are not suitable for direct transfer for new type of offshore structures and new way of their use. There are also new versions of Ultrasonic FMD under development, dedicated just for Offshore Wind turbines. New approaches are described in [1] but have a significant weak points which will be listed hereinafter.

X-ray or Gamma-ray is the most widely used mean for FMD. However, significant disadvantages of this approach are:
- it is based on a radioactive, and hence, dangerous medium;
- it requires remotely operated vehicle(s) to be carried out (some companies offer also diver as an operator version);
- need for operators to be trained as radiation protection supervisors.

Ultrasonic FMD is an alternative method for the radioactive and non-safe approach describe above. However there are other significant drawbacks:
- it is prone to any misalignment of the emitter probe -requires marine growth removal;
- it is time consuming due to need for surface preparation.

Although there have been new versions of ultrasonic FMD developed just for Offshore Wind Industry. Such are described, e.g. in [1], but are still under development and:
- the system life time depends on the battery service period,
- it requires sophisticated ultrasonic receivers to correctly detect and normalize signals from sensors;
- the salt-induced sensors can be used only once.

Although the apparatus and method described herein are based on conventional FMD resulting from through thickness cracks they overcome the indicated disadvantages of these methods e.g. by early damage detection, extremely low costs, and long-term reliability.

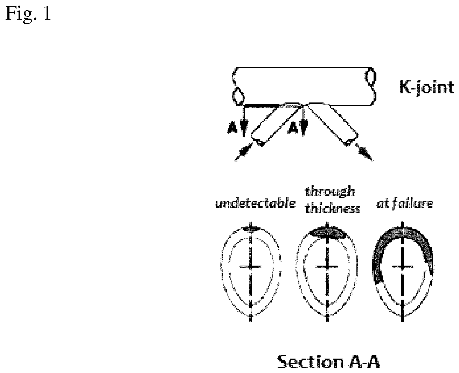

Fig. 1 shows a typical K-joint of hollow section members, i.e. a tubular connection of two braces to a chord. Different stages of crack propagation are shown from left to the right along the indicated section A-A. Whereas an initial crack in the heel region between the brace and the chord remains undetected, the through thickness crack shown in the middle will cause a pressure change at least inside the brace and hence, can be detected before complete failure.

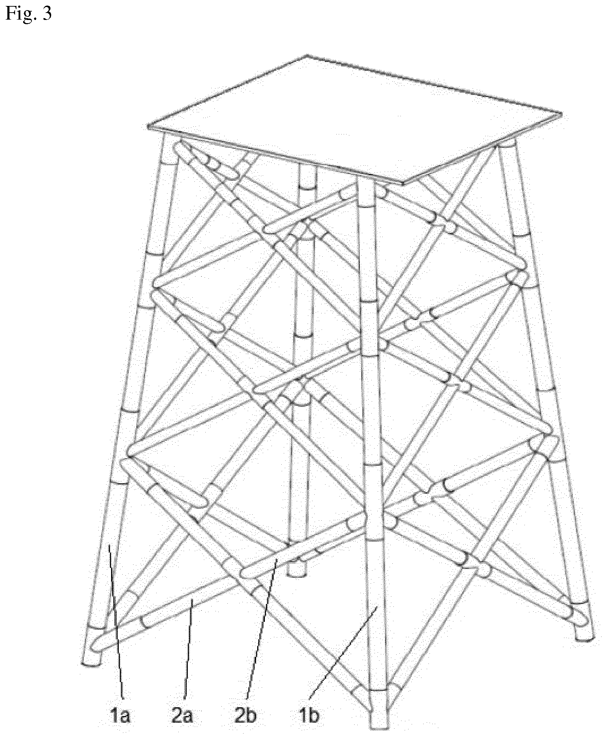

The key principle of the monitoring technique comprises the detection of an air flow by a pressure change which is caused by a through thickness crack of a pressurized member. Fig. 3 shows a typical structural element of a grounding structure, consisting of hollow members, which are disposed between four tubular legs, e.g. two braces 2a and 2b disposed between legs 1a and 1b. Braces 2 and legs 1 of a jacket support structure are usually dry inside and airtight. They can be over-pressured up to the certain level. Having pressure level higher than water pressure on any depth (e.g. for a 30 meter water depth a pressure higher than 4 bar) a through thickness crack will cause a clearly detectable pressure drop. The principles are in the following described taking basis in an example of an offshore substation jacket. Thus, a full monitoring system covers all tubular structural components of the monitored structure, e.g. such as the ones shown in the Fig. 3.

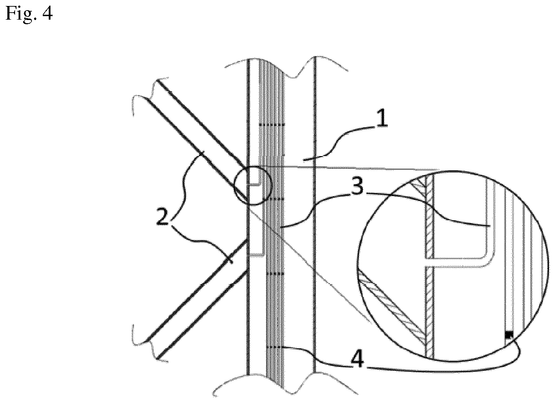

There are different options for the monitoring apparatus and process with respect to the compartment size and organization:
1) Member wise compartments: Every structural member (e.g. a brace) will be connected with an air tube as shown in Fig 4. This facilitates a member wise localization during monitoring. The exact localization is performed by detecting the air flow through the defect.
2) One compartment for each structural part: A structural part like e.g. a brace group will be connected with an air tube and is airtight separated from any other members. The braces of the brace group are connected air-permeably with small drilling holes. This facilitates a structural-part-wise localization by the described monitoring apparatus and method. The exact localization is performed by detecting the air flow through the defect.
3) The whole structure is one single compartment: The whole structure is airtight but the connections between a structure's members are air-permeable by small drilling holes. Here, the localization is entirely based on the detecting of the air flow through the defect.

Depending on the given circumstances of a given structure, the described apparatus can be adapted to actual requirements. The adaptation comprises e.g. drilling of holes which will connect internal space of joined members in the joint region during jacket production.

Fig. 4 shows a K-joint with a main chord (leg) 1 and two braces 2, wherein inside the leg air tubes 3 are fastened by fastening means 4, illustrating an embodiment of the present apparatus and method.

The apparatus and monitoring process indicates a through thickness crack and allows for its repair utilizing the redundancy of a jacket structure. The allowance for a repair time implies that a leak-before-break (LBB) condition is fulfilled. It can be shown that for redundant structures like jackets a LBB exists (see e.g. [5]). After repair of the defect the hot spot behaves like a newly produced hot spot or like a hot spot with accumulated fatigue damage but no crack (see e.g. [4])

The apparatus described herein is designed to possess a higher life time than or at least the design life time of the jacket structure. This is achieved by maximal reduction of the number of mechanical elements and the application of components with decades of proven operation, like screw-type compressor; polymer tubes; vibration-wire sensors; air tight system fittings; ball valves; and neodymium magnets for air tube holders.

Advantageously, a screw-type compressor has an ability to operate continuously for dozens of months with a typical "mean time between failure" (MTBF) higher than 40.000 hours, in particular with a MTBF value higher than 30.000 hours.

Advantageously, polymer tubes (e.g. polyamide tubes) are wear and compressor oil resistant and can be used in low temperatures.

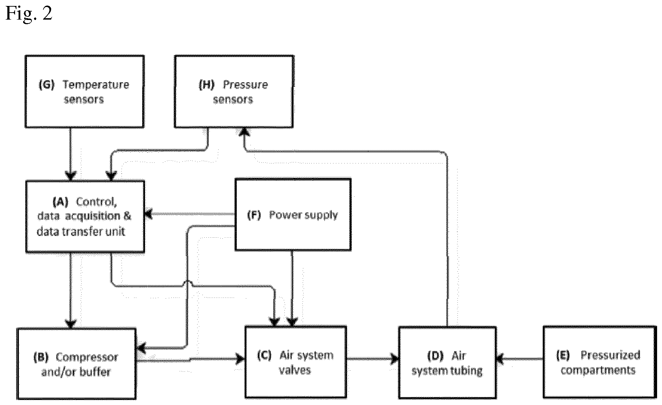

Vibration-wire type pressure sensors (cf. box H in Fig. 2) are outstanding devices with respect to durability, stability of the sensor signal over a long time and life of the sensor. There is a documented [2] example of a sensor test which lasted 27 years without any failure of the sensor. Furthermore, the pressure transducer as the second main component for the pressure measurement is stably in operation since 1984 which is up to now 29 years (see [3]).

Neodymium magnets are the strongest and most permanent magnets known. They lose less than 1% of their strength over 10 years and tube holders based on them are fatigue-proof.

The proposed monitoring system provides information about any TTC presence with better sensitivity than traditional FMD techniques. In contrast to traditional FMD techniques water ingress by "flooding" is not required for detection of a failure since air leakage from the over pressured member is sufficient. As the viscosity of air is about 50 times less than the viscosity of water, the penetration of a TTC by air is much easier to detect if compared with water. Hence, advantageously, the TTC failure detection is much faster in comparison to conventional FMD.

The presence of a TTC can be detected at two different levels. Firstly, the monitoring system indicates which element has a TTC due to separate measurements of a pressure level for each of the elements monitored. Secondly, the exact spot of a crack can be detected within a given member before and/or during the repair procedure. For repair the element with a TTC can again be over-pressurized by use of compressor (cf. box B in Fig. 2) and appropriate air system valve or valves (cf. box C in Fig. 2). Air bubbles will occur and the crack can be spotted. Precise TTC spot detection is also possible above the water-line since air pressure changes in the faulty member will generate a sound signal by air flowing out.

Advantageously, in contrast to monitoring method proposed in [1] the apparatus and method described herein can be used repetitively. After TTC occurrence and following repairing action the system can operate as for unaffected member. It does not matter if water is pumped out or will stay in compartment. The air can be pressurized again in air system tubing (cf. box G in Fig. 2) branch connected to certain compartment (cf. enlarged view in Fig. 4).

A further advantage of the described monitoring principle consists in the applicability to every tubular element of a jacket structure, whilst merely minimal interference with a given structure is required. In particular, the hole drilled from a leg to any brace member connected to the leg may have an approximate diameter from 5 through 50 mm, particularly from 10 through 25 mm, preferably from 15 mm to 20 mm. The said connection represents connection of pressurized compartments (cf. box E in Fig. 2) to air piping system (cf. box D in Fig. 2).

The tubing (cf. box D in Fig. 2) which fluidically connects the pressure sensor (cf. box H in Fig. 2) to a given hollow structure (cf. box E in Fig. 2) can advantageously be installed inside the structure or an element and, hence, be protected from harsh ambient conditions. Furthermore, the use of neodymium magnets in combination with glue dedicated for magnets overcomes in most cases any need for additional fixtures, e.g. by welding.

Application of the suggested method does not require any additional external equipment to be attached to the structure.

The ball valves (cf. box C in Fig 2) which separate the tubing system (cf. box D in Fig. 2) from the compressor (cf. box B in Fig. 2) during regular internal compartment pressure monitoring can be advantageously controlled remotely thanks to ball valves actuators connected to the control, data acquisition and data transfer unit (cf. box A in Fig. 2).

Furthermore, the suggested monitoring device and method is independent from temperature fluctuation. An approach to temperature effects elimination depends on chosen version of apparatus and monitoring process and it also depends on required sensitivity of the system. For example, if minimum required change of pressure level to detect TTC is accepted to be 10% than whole structure can act as single compartment. Data normalization will base only on the construction and working principle of the used pressure sensor. The built in temperature sensor in vibration wire pressure sensors facilitates automated sensor compensation and it can also be used for pressure value normalization. This example is based on yearly North Sea water and air temperature changes [6].

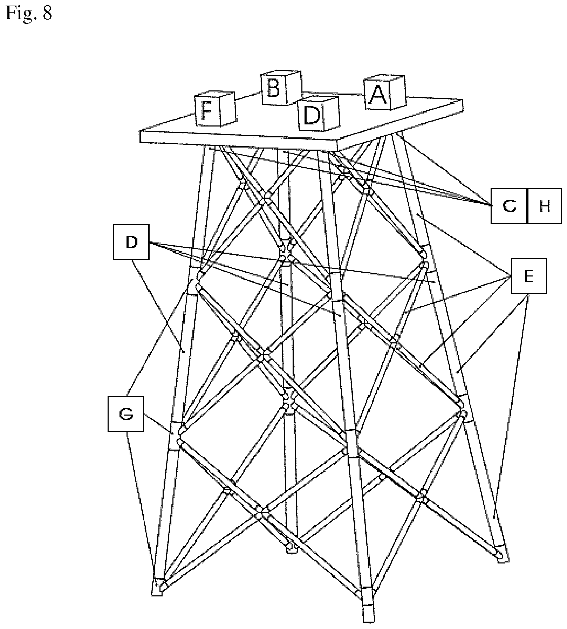

The second example refers to high TTC sensitivity demand. In this case a suggested version of apparatus and monitoring process will include separate pressure change monitoring within every single compartment of the jacket structure shown in Fig. 3. Additionally temperature sensors (cf. box G in Fig. 2) can be deployed within structure close to (cf. box G in Fig. 8) or inside monitored compartments. In this version sensors gather information about temperature within structure and enable pressure data normalization in the case when certain pressure sensor is distant from the monitored compartment and thus in the different temperature. Sensor's temperature dependency compensation will again base on built in pressure sensor. This approach requires no more than 3% pressure change to detect a TTC in members under water. Declared trigger level is again based on North Sea water yearly temperature changes [6].

Flexibility in temperature compensation and data normalization approach is an advantage enabling adjustment of apparatus and method to specific structure type, monitoring requirements and available budget.

Moreover, temperature sensors (cf. box G in Fig. 8) deployed in legs (e.g. 1a and 1b in Fig. 3) close to certain compartments will be covered with polystyrene foam sheets. Such measure ensures isolation from air inside legs and allows for correct steel temperature measurement on a given sea depth.

However, wind speed and wave induced vibrations and sway will affect the level of TTC opening, once a TTC occurred. Notwithstanding, even the smallest TTC recorded during experimental tests enables the pressure drop detection after merely tens of seconds.

In contrast to traditional FMD techniques, the present monitoring approach also does not depend on Sea depth in the range of typical jacket structure depth installations. Furthermore, there is no need for a weather window to allow tubular members monitoring. Moreover, the apparatus and monitoring method are independent from any marine growth, do not require divers or remotely operated vehicles. In particular, the monitoring is fully automatic.

In order to ensure data storage and processing in the event of power outages, a battery will be used as a part of power supply unit (cf. box F in Fig. 2). Thus, some operation period of the monitoring apparatus can be provided without external power supply. In case of a power cut, the system switches to safe emergency mode. In this state the electronic circuitry of the signal transmission unit and/or the control unit (cf. box A in Fig. 2) continue to gather and to store information about any leakage. As energy saving measure the compressor (cf. box B in Fig. 2) will be switched off during power failure or outage. The battery capacity is designed to facilitate an unaffected system operation during absence of external power supply.

The monitoring system as described fulfils any relevant guidelines in regard to monitoring systems and to structural condition assessment as well as the legal requirements of the German Federal Maritime and Hydrographic Agency (BSH).

The monitoring system as described is designed to test-itself on a regular basis. In contrast thereto new Ultrasonic FMD approaches described in [1] do not allow self-inspection. Different pressure levels within parts of the system will enable automatic differentiation of system failure from TTC occurrence. Pressure valves (cf. box C in Fig. 2), pressure sensors (cf. box H in Fig. 2) and tubing (cf. box D in Fig. 2) will be placed, dependent on chosen apparatus and method option, in one, two, three or four corner legs of a jacket structure. Corner legs will be pressurized to different pressure level than braces. Any misconnection in tubing will lead to pressure levelling between leg and any brace. It will not only result in information about leakage within system but it will also indicate which tubing branch has said failure.

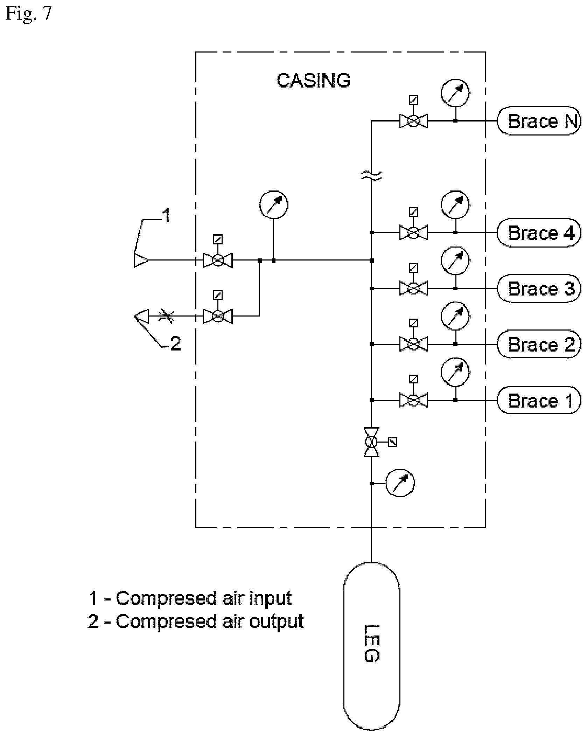

Another embodiment of a self-test ability is based on TTC simulation. Air system valves (cf. box C in Fig. 2) shown in Fig. 7 can be arranged in such a way that every single compartment can be depressurized separately. It will be identical to situation when TTC occurs. The system reaction will be observed in described test mode and the system operation will be assessed. This action will also test the compressor unit (cf. box B in Fig. 2) as all compartments needs to be pressurized to default levels again.

According to typical embodiments of the monitoring system and apparatus the final output, i.e. information about the presence of a through thickness crack (TTC), will be transferred from control, data acquisition and data transfer unit (cf. box A in Fig. 2) to e.g. a central information processing unit. In particular for monitoring basement structures in an offshore wind power facility or farm a human machine interface of the system can be merged with supervisory control and data acquisition (SCADA) system of a wind park.

SCADA systems used within offshore wind farms gather environmental data like wind speed and wind direction; operational data like wind turbine nacelle position, rotor speed or pitch angle; machinery condition data like main shaft vibration or gearbox oil temperature. Advantageously, thanks to said integration a SCADA system can be now extended with information about structural performance, delivering more detailed supervision of wind assets. Compatibility with SCADA will further simplify the data management as it can be integrated under one human machine interface.

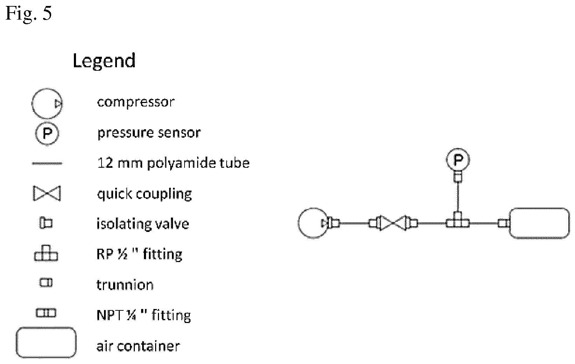

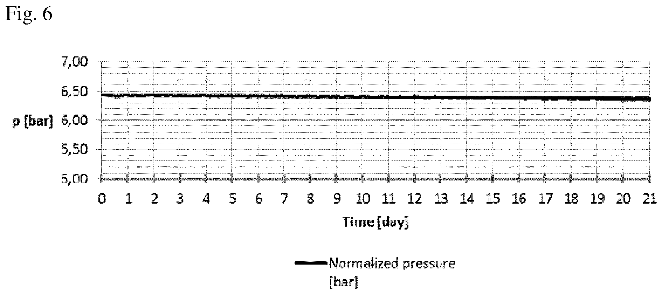

The normalized pressure for an exemplary monitoring period of 21 days is show in Fig. 6. The laboratory scale installation as show in Fig. 5 has been subjected to leakage tests. Absolute pressure values were normalized against the temperature pressure pattern.

The test was carried out at an average ambient temperature of 22.7 °C. The results were scaled for the brace member of 1 m³ volume in order to increase the sensitivity for leakage. According to estimates the system will lose about 1 % of initial pressure within 1 year what means that leakage impact on the system operation can be neglected. Similar investigation was conducted with temperature variances between -20°C to +40°C. In this case the average leakage again was in the same order as for room temperature.

In preferred embodiment control, data acquisition and data transfer unit (cf. box A in Fig. 2) will be placed in the upper part of the offshore substation as shown in the Fig. 8 (cf. box A in Fig. 8). The main part of discussed unit will be in the form of industrial computer and auxiliary electronics. The unit will control the operation of compressor and air system valves. It will gather information from pressure sensors, temperature sensors and a compressor. The information will be sent to selected servers by means of substation communication network. This network will also be used for remote system set up and configuration.

In preferred embodiment compressor and air buffer unit (cf. box B in Fig. 2) will be placed in the upper part of the offshore substation as shown in the Fig. 8 (cf. box B in Fig. 8). The main part of discussed unit will be in the form of compressor and buffer container.

In preferred embodiment air system valves unit (cf. box C in Fig. 2) will be integrated with pressure sensors unit (cf. box H in Fig. 2) which will be placed in one casing inside the upper part of the offshore substation legs. There will be separate casing for each leg as shown in the Fig. 8 (cf. box C and box H in Fig. 8). The main contents of discussed casing will be in the form of valves and pressure sensors, one pair for each hollow member as shown in the Fig. 7.

In preferred embodiment air system tubing unit (cf. box D in Fig. 2) will consist of 8 main branches gathered in 2 groups. In first group fall branches located inside each leg and in second group fall branches on the route from each leg to compressor unit. Said groups are shown in the Fig. 8 (cf. boxes D in Fig. 8). The main part of discussed unit will be in the form of polyamide tubes and air system fittings dedicated for offshore use.

In preferred embodiment pressurized compartments (cf. box E in Fig. 2) are in the form of brace members according to structural division and corner legs. Exemplary compartments are shown in the Fig. 8 (cf. box E in Fig. 8).

In preferred embodiment power supply unit (cf. box F in Fig. 2) will be placed in the upper part of the offshore substation as shown in the Fig. 8 (cf. box F in Fig. 8). The main part of the discussed unit will be in the form of electrical converter supplying power from an external source for regular system operation and battery for use in an emergency mode as described earlier hereinabove.

In preferred embodiment temperature sensors unit (cf. box G in Fig. 2) will consist of separate temperature sensors placed in leg-braces convergence places. Exemplary convergence places within one leg are shown in the Fig. 8 (cf. box G in Fig. 8). Temperature sensors will be connected in series and further with control unit (cf. box A in Fig. 2).

Summarizing the above, herewith suggested are:
A method for long-term monitoring of a civil engineering structure, the civil engineering structure comprising at least one hollow element comprising an internal closed compartment, the method comprising:
   Establishing an internal fluidic pressure in the compartment;
   Monitoring the internal fluidic pressure in order to detect a change of the internal fluidic pressure indicating a through thickness crack in the compartment, wherein long term monitoring comprises monitoring over at least two weeks, preferably over 1 month, more preferably over 1 year, especially over periods extending five years;
Using said method for monitoring of: a treatment plant; a power plant; a tower; a cooling tower; a lock construction; any housing or industrial construction; a building construction; a cinema; a stadium; a pavilion; a bridge; an overpass; a flyover; an elevated guideway; or a grounding thereof; a grounding structure, an off-shore grounding of a wind generator; a substation or a wind turbine jacket; a scaffold; a scaffolding; a substructure; a groundwork; a fundament; a base; a double bottom; a double hull; a pontoon or a floating wind turbine support structure; a truss; a flat-chord truss; a stilt or support element for any industrial equipment or platform; an offshore monopile, a tripod, a jacket, a wind turbine jacket substructure, a wind turbine tower, an offshore transformer substation substructure;
An apparatus for long term monitoring of a civil engineering structure comprising a hollow structure, the hollow structure comprising at least one closed internal compartment, the apparatus comprising:
   a pressure sensor, adapted to measure an internal fluidic pressure in the compartment;
   a controller for recording and comparing the internal pressure with an established pressure or with a given threshold value, the controller being adapted to detect a through thickness crack in the compartment by a change of the internal fluidic pressure; and
A TTC detection method for a grounding structure comprising at least one internal closed compartment, the TTC detection method comprising:
   Establishing an internal fluidic pressure in the internal closed compartment;
   Monitoring the internal fluidic pressure over at least two weeks, preferably over 1 month, more preferably over 1 year, especially over periods extending five years;
   Detecting a change of the internal target pressure indicating a through thickness crack in the at least one closed compartment.

### References

[1] Mijarez R., Gaydecki P., Burdekin M. (2007). "Flood member detection for real-time structural health monitoring of sub-sea structures of offshore steel oilrigs". Smart Materials and Structures 16 (2007): 1857-1869;
[2] DiBiagio E. (2003). "A case study of vibrating-wire sensors that have vibrated continuously for 27 years". Norwegian Geotechnical Institute. 6th, International Symposium on Field Measurements in Geomechanics; Field measurements in geomechanics. ISBN: 9058096025;
[3] Geokon Inc., "Long-Term Stability Data for Geokon Pressure Transducers";
[4] Straub, D. (2004). "Generic Approaches to Risk Based Inspection Planning for Steel Structures." IBK Bericht 284. Zurich, ETH Zurich;
[5] Kou, K. P. and F. M. Burdekin (2008). "The applicability of leak-before-break on flooded member detection for offshore structures under fatigue." Engineering Fracture Mechanics 75(1): 31-40;
[6] Korevaar, C. G. (1989). "Climatological data for the North Sea based on observations by voluntary observing ships over the period 1961-1980". Royal Netherlands Metrological Institute.

## Claims

1. Method for a continuous monitoring of a civil engineering structure, the civil engineering structure comprising at least one hollow structural element comprising an internal closed compartment,
wherein the method is **characterized by**:
- providing a pressure sensor, adapted to measure an internal fluidic pressure in the internal closed compartment,
- establishing an internal fluidic pressure in the internal closed compartment,
- providing a fluidic connection between the at least one internal closed compartment and the pressure sensor, wherein providing a fluidic connection comprises connecting the pressure sensor directly with the internal closed compartment or disposing the pressure sensor inside the internal closed compartment,
- providing a control unit which is configured to detect a change of the internal fluidic pressure value,
- monitoring the internal fluidic pressure in order to detect a change of the internal fluidic pressure indicating a through thickness crack in the internal closed compartment,
wherein continuous monitoring comprises monitoring over at least two weeks, and
wherein the pressure sensor compensates changes of an ambient temperature and/or changes of an ambient pressure and/or a shock.

2. Method according to claim 1, wherein a fluid inside the internal closed compartment comprises a liquid or a gas.

3. Method as claimed in claim 2, wherein the gas is air or a constituent thereof.

4. Method as claimed in claim 1, wherein providing a fluidic connection comprises connecting the sensor with the internal closed compartment by means of a tube, tubing, pipe, or capillary.

5. Method as claimed in claim 4, further comprising:
- providing a fastening means for the tube or tubing.

6. Method as claimed in claim 5, wherein the fastening means is selected from a glue, a magnet, a solder, a weld, or a clamp.

7. Method as claimed in one of the preceding claims, wherein the pressure sensor is selected from a pressure sensor such as a piezoresistive, electromagnetic, optical, ionization based, vibrating-wire, optical, piezoelectric, capacitive, thermal or potentiometer based sensor.

8. Method according any of the claims 4 to 6, wherein the tube, tubing, capillary or pipe comprises polyethylene, polyvinyl chloride, polypropylene, nitrile based rubber, polyether ether ketone (PEEK), polyamide, ethylene vinyl acetate or any other polymer, copper, aluminum, or a steel.

9. Method as claimed in one of the preceding claims, wherein generating an internal fluidic pressure comprises:
- providing a pump or a gas container comprising a pressurized gas, and/or
- providing evacuating means such as an evacuation pump or a vacuum pump.

10. Method as claimed in one of the preceding claims, wherein the hollow structural element comprises a hollow beam, a monopile, and/or a brace which is welded to a chord or a chord which is welded to a brace.

11. Method as claimed in one of the preceding claims, wherein the continuous monitoring comprises monitoring for up to 50 years.

12. Method for maintaining a hollow structural element comprising at least one internal closed compartment **characterized by**:
- applying the method for continuous monitoring according to claims 1 through 11;
- detecting a change of pressure in the at least one internal closed compartment, which indicates a leak, selected from a through thickness crack or other opening;
- operating a pump in order to produce a fluid stream, preferably a gas stream, through the leak;
- localizing the leak;
- repairing the leak.

13. Using the method according to any of claims 1 through 11, for monitoring of:
- a treatment plant; a power plant; a tower; a cooling tower; a lock construction; any housing or industrial construction; a building construction; a cinema; a stadium; a pavilion; a bridge; an overpass; a flyover; an elevated guideway; or a grounding thereof;
- a grounding structure, an off-shore grounding of a wind generator; a substation or a wind turbine jacket; a scaffold; a scaffolding; a substructure; a groundwork; a fundament; a base; a double bottom; a double hull; a pontoon or a floating wind turbine support structure; a truss; a flat-chord truss; a stilt or support element for any industrial equipment or platform;
- an offshore monopile, a tripod, a jacket, a wind turbine jacket substructure, a wind turbine tower, an offshore transformer substation substructure.

14. Apparatus for continuous monitoring of a civil engineering structure comprising a hollow structural element, the hollow structural element comprising at least one closed internal compartment, **characterized by**:
- a pressure sensor, adapted to measure an internal fluidic pressure in the at least one closed internal compartment, wherein the pressure sensor is either directly connected with the internal closed compartment or disposed inside the closed compartment, and wherein the pressure sensor is configured to compensate changes of an ambient temperature and/or changes of an ambient pressure and/or a shock;
- a fluidic connection between the at least one internal closed compartment and the pressure sensor;
- a controller for recording and comparing the internal pressure with an established pressure or with a given threshold value, the controller being adapted to detect a through thickness crack in the at least one closed internal compartment by a change of the internal fluidic pressure,
wherein continuous monitoring comprises monitoring over at least two weeks.

15. Apparatus according to claim 14, further comprising:
- a warning device for indicating a through thickness crack in the at least one internal closed compartment.

16. Apparatus according to claims 14 or 15, further comprising:
- fastening means for fastening the tube or tubing to the hollow structural element.

17. Apparatus according to claims 14 through 16, wherein the civil engineering structure is selected from off-shore and on-shore or on-land engineering structures, in particular from: a substation or wind turbine jacket; a scaffold, a scaffolding, a substructure, a groundwork, a fundament, a base, a double bottom, a double hull, a pontoon or floating wind turbine support structure, a bridge, or a tower.

18. Apparatus according to one of claims 14 to 17, wherein a sensor is fluidically connected to at least two separate internal closed compartments.

19. Apparatus according to claim 18, wherein the at least two internal closed compartments are fluidically connected with each other and the sensor is fluidically communicating with one of them.

20. Apparatus according to claims 14 through 19, further comprising fastening means for fastening the tube and/or tubing to the hollow structural element, wherein fastening is selected from fastening to an inside and/or to an outside of the hollow structural element.

21. Using the method according to claim 12 for through thickness crack detection in a grounding structure comprising the at least one hollow structural element, **characterized by**:
- establishing an internal fluidic pressure in the internal closed compartment;
- monitoring the internal fluidic pressure over at least two weeks;
- detecting a change of the internal fluidic pressure indicating a through thickness crack in the internal closed compartment.

## Patentansprüche

1. Verfahren zur kontinuierlichen Überwachung einer Ingenieursstruktur, wobei die Ingenieursstruktur mindestens ein hohles Bauelement umfasst, das einen innen liegenden abgeschlossenen Raum umfasst,
wobei das Verfahren **gekennzeichnet ist durch**:
- Bereitstellen eines Drucksensors, der dafür ausgelegt ist, einen inneren Fluiddruck in dem innen liegenden abgeschlossenen Raum zu messen,
- Einstellen eines inneren Fluiddrucks in dem innen liegenden abgeschlossenen Raum,
- Bereitstellen einer Fluidverbindung zwischen dem mindestens einen innen liegenden abgeschlossenen Raum und dem Drucksensor, wobei das Bereitstellen einer Fluidverbindung das direkte Verbinden des Drucksensors mit dem innen liegenden abgeschlossenen Raum oder das Anordnen des Drucksensors innerhalb des innen liegenden abgeschlossenen Raumes umfasst,
- Bereitstellen einer Steuereinheit, die dafür ausgelegt ist, eine Änderung des Wertes des inneren Fluiddrucks zu erfassen,
- Überwachen des inneren Fluiddrucks, um eine Änderung des inneren Fluiddrucks zu erfassen, die einen in Dickenrichtung verlaufenden Riss an dem innen liegenden, geschlossenen Raum angibt,
wobei die kontinuierliche Überwachung eine Überwachung über mindestens zwei Wochen umfasst, und
wobei der Drucksensor Änderungen einer Umgebungstemperatur und/oder Änderungen eines Umgebungsdrucks und/oder einen Stoß kompensiert.

2. Verfahren nach Anspruch 1, wobei ein Fluid innerhalb des innen liegenden abgeschlossenen Raumes eine Flüssigkeit oder ein Gas umfasst.

3. Verfahren nach Anspruch 2, wobei das Gas Luft oder ein Bestandteil davon ist.

4. Verfahren nach Anspruch 1, wobei das Bereitstellen einer Fluidverbindung das Verbinden des Sensors mit dem innen liegenden abgeschlossenen Raum mittels eines Rohrs, eines Schlauchmaterials, einer Röhre oder Kapillare umfasst.

5. Verfahren nach Anspruch 4, ferner umfassend:
- Bereitstellen eines Befestigungsmittels für das Rohr oder Schlauchmaterial.

6. Verfahren nach Anspruch 5, wobei das Befestigungsmittel ausgewählt ist aus einem Kleber, einem Magneten, einer Verlötung, einer Verschweißung oder einer Klammer.

7. Verfahren nach einem der vorangehenden Ansprüche, wobei der Drucksensor ausgewählt ist aus einem Drucksensor, wie einem piezoresistiven, elektromagnetischen, optischen, auf Ionisierung basierenden, Schwingsaiten-, optischen, piezoelektrischen, kapazitiven, thermischen oder auf einem Potentiometer basierenden Sensor.

8. Verfahren nach einem der Ansprüche 4 bis 6, wobei das Rohr, das Schlauchmaterial, die Kapillare oder die Röhre Polyethylen, Polyvinylchlorid, Polypropylen, NitrilKautschuk, Polyetheretherketon (PEEK), Polyamid, Ethylenvinylacetat oder irgendein anderes Polymer, Kupfer, Aluminium oder einen Stahl umfasst.

9. Verfahren nach einem der vorangehenden Ansprüche, wobei das Erzeugen eines inneren Fluiddrucks umfasst:
- Bereitstellen einer Pumpe oder eines Gasbehälters, der ein unter Druck stehendes Gas umfasst, und/oder
- Bereitstellen eines Evakuierungsmittels wie etwa einer Entlüftungspumpe oder einer Unterdruckpumpe.

10. Verfahren nach einem der vorangehenden Ansprüche, wobei das hohle Bauelement einen hohlen Träger, einen Monopile und/oder eine Versteifung, die an einen Gurt geschweißt ist, oder einen Gurt, der an eine Versteifung geschweißt ist, umfasst.

11. Verfahren nach einem der vorangehenden Ansprüche, wobei das kontinuierliche Überwachen ein Überwachen für bis zu 50 Jahre umfasst.

12. Verfahren zum Instandhalten eines hohlen Bauelements, das mindestens einen innen liegenden abgeschlossenen Raum umfasst, **gekennzeichnet durch**:
- Anwenden des Verfahrens zum kontinuierlichen Überwachen nach den Ansprüchen 1 bis 11;
- Erfassen einer Druckänderung in dem mindestens einen innen liegenden abgeschlossenen Raum, die auf ein Leck hindeutet, ausgewählt aus einem in Dickenrichtung verlaufenden Riss oder einer anderen Öffnung;
- Betätigen einer Pumpe, um einen Fluidstrom, vorzugsweise einen Gasstrom, durch das Leck zu erzeugen;
- Lokalisieren des Lecks;
- Reparieren des Lecks.

13. Anwendung des Verfahrens nach einem der Ansprüche 1 bis 11 zur Überwachung von:
- einer Aufbereitungsanlage; einem Kraftwerk; einem Turm; einem Kühlturm; einem Schleusenbau; irgendeinem Wohnbau oder Industriebau; einer Gebäudekonstruktion; einem Kino; einem Stadion; einer Halle; einer Brücke; einer Überführung; einer Hochstraße; einer Hochbahn; oder einer Bodenverankerung dafür;
- einer Bodenverankerungsstruktur, einer Off-shore-Bodenverankerung einer Windkraftanlage; einer Umspannstation oder einem Jacket für Windturbinen; einem Gerüst; einem Gerüstsystem; einer Gründung; einem Unterbau; einem Fundament; einer Basis; einem Doppelboden; einer Doppelhülle; einem Ponton oder einer Trägerstruktur für eine schwimmende Windturbine; einem Tragwerk; einem Flachgurt-Tragwerk; einem Pfeiler oder Stützelement für irgendeine Industrieanlage oder Plattform;
- einem Offshore-Monopile, einem Tripoden, einem Jacket, einem Unterbau für ein Windturbinen-Jacket, einem Windturbinenturm, einem Unterbau für eine Offshore-Umspannstation.

14. Vorrichtung zum kontinuierlichen Überwachen einer Ingenieursstruktur, die ein hohles Bauelement umfasst, wobei das hohle Bauelement mindestens einen innen liegenden abgeschlossenen Raum umfasst, **gekennzeichnet durch**:
- einen Drucksensor, der dafür ausgelegt ist, einen inneren Fluiddruck in dem mindestens einen innen liegenden abgeschlossenen Raum zu messen; wobei der Drucksensor entweder direkt mit dem innen liegenden abgeschlossenen Raum verbunden oder innerhalb des abgeschlossenen Raumes angeordnet ist, und wobei der Drucksensor dafür ausgelegt ist, Änderungen einer Umgebungstemperatur und/oder Änderungen eines Umgebungsdrucks und/oder einen Stoß zu kompensieren;
- eine Fluidverbindung zwischen dem mindestens einen innen liegenden abgeschlossenen Raum und dem Drucksensor;
- eine Steuerung zum Aufzeichnen des Innendrucks und Vergleichen desselben mit einem eingestellten Druck oder mit einem vorgegebenen Schwellenwert, wobei die Steuerung dafür ausgelegt ist, einen in Dickenrichtung verlaufenden Riss an dem mindestens einen innen liegenden abgeschlossenen Raum durch eine Änderung des inneren Fluiddrucks zu erfassen,
wobei das kontinuierliche Überwachen ein Überwachen über mindestens zwei Wochen umfasst.

15. Vorrichtung nach Anspruch 14, ferner umfassend:
- eine Heizvorrichtung zum Anzeigen eines in Dickenrichtung verlaufenden Risses in dem mindestens einen innen liegenden abgeschlossenen Raum.

16. Vorrichtung nach Anspruch 14 oder 15, ferner umfassend:
- ein Befestigungsmittel zum Befestigen des Rohrs oder Schlauchmaterials an dem hohlen Bauelement.

17. Vorrichtung nach den Ansprüchen 14 bis 16, wobei die Ingenieursstruktur ausgewählt ist aus Offshore- und Onshore- oder Land-Ingenieursstrukturen, insbesondere aus: einer Umspannstation oder einem Windturbinen-Jacket; einem Gerüst, einem Gerüstsystem, einer Gründung, einem Unterbau, einem Fundament, einer Basis, einem Doppelboden, einer Doppelhülle, einem Ponton oder einer Trägerstruktur für eine schwimmende Windturbine, einer Brücke oder einem Turm.

18. Vorrichtung nach einem der Ansprüche 14 bis 17, wobei ein Sensor mit mindestens zwei separaten innen liegenden abgeschlossenen Räumen in Fluidverbindung steht.

19. Vorrichtung nach Anspruch 18, wobei die mindestens zwei innen liegenden abgeschlossenen Raume miteinander in Fluidverbindung stehen und der Sensor mit einem von ihnen fluidisch kommuniziert.

20. Vorrichtung nach den Ansprüche 14 bis 19, ferner ein Befestigungsmittel umfassend, um das Rohr und/oder Schlauchmaterial an dem hohlen Bauelement zu befestigen, wobei das Befestigen ausgewählt ist aus einem Befestigen an einer Innen- und/oder Außenseite des hohlen Bauelements.

21. Anwendung des Verfahrens nach Anspruch 12 für die Erfassung von in Dickenrichtung verlaufenden Rissen in einer Bodenverankerungsstruktur, die das mindestens eine hohle Bauelement umfasst, **gekennzeichnet durch**:
- Einstellen eines inneren Fluiddrucks in dem innen liegenden abgeschlossenen Raum,
- Überwachen des inneren Fluiddrucks über mindestens zwei Wochen;
- Erfassen einer Änderung des inneren Fluiddrucks, die einen in Dickenrichtung verlaufenden Riss an dem innen liegenden abgeschlossenen Raum angibt.

## Revendications

1. Procédé de surveillance continue d'une structure de génie civil, la structure de génie civil comprenant au moins un élément structurel creux comprenant un compartiment intérieur fermé,
dans lequel le procédé est **caractérisé par** :
- la fourniture d'un capteur de pression, adapté pour mesurer une pression de fluide interne dans le compartiment intérieur fermé,
- l'établissement d'une pression de fluide interne dans le compartiment intérieur fermé,
- la fourniture d'une connexion fluidique entre le au moins un compartiment intérieur fermé et le capteur de pression, dans lequel la fourniture d'une connexion fluidique comprend le raccordement du capteur de pression directement au compartiment intérieur fermé ou le placement du capteur de pression dans le compartiment intérieur fermé,
- la fourniture d'une unité de commande qui est configurée pour détecter un changement de la valeur de pression de fluide interne,
- la surveillance de la pression de fluide interne afin de détecter un changement de pression de fluide interne qui indique une fissure dans le sens de l'épaisseur du compartiment intérieur fermé,
dans lequel la surveillance continue comprend une surveillance pendant au moins deux semaines, et
dans lequel le capteur de pression compense les changements de température ambiante et/ou les changements de pression ambiante et/ou un choc.

2. Procédé selon la revendication 1, dans lequel un fluide à l'intérieur du compartiment intérieur fermé comprend un liquide ou un gaz.

3. Procédé selon la revendication 2, dans lequel le gaz est de l'air ou un constituant de celui-ci.

4. Procédé selon la revendication 1, dans lequel la fourniture d'une connexion fluidique comprend le raccordement du capteur au compartiment intérieur fermé à l'aide d'un tube, d'un tubage, d'un conduit ou d'un capillaire.

5. Procédé selon la revendication 4, comprenant en outre :
- la fourniture d'un moyen de fixation pour le tube ou le tubage.

6. Procédé selon la revendication 5, dans lequel le moyen de fixation est choisi parmi une colle, un aimant, une soudure, un brasage, ou un serre-joint.

7. Procédé selon l'une des revendications précédentes, dans lequel le capteur de pression est choisi parmi un capteur de pression tel qu'un capteur piézorésistif, électromagnétique, optique, à ionisation, à fil vibrant, optique, piézoélectrique, capacitif, thermique, ou à potentiomètre.

8. Procédé selon l'une quelconque des revendications 4 à 6, dans lequel le tube, le tubage, le capillaire ou le conduit comprend du polyéthylène, du polychlorure de vinyle, du polypropylène, du caoutchouc au nitrile, du polyéther éther cétone (PEEK), un polyimide, de l'éthylène vinyle acétate, ou tout autre polymère, cuivre, aluminium ou un acier.

9. Procédé selon l'une des revendications précédentes, dans lequel la génération d'une pression de fluide interne comprend :
- la fourniture d'une pompe ou d'un réservoir de gaz comprenant un gaz pressurisé, et/ou
- la fourniture d'un moyen d'évacuation tel qu'une pompe d'évacuation ou une pompe à vide.

10. Procédé selon l'une des revendications précédentes, dans lequel l'élément structurel creux comprend un faisceau creux, un monopieu, et/ou un renfort soudé sur une membrure, ou une membrure qui est soudée sur un renfort.

11. Procédé selon l'une des revendications précédentes, dans lequel la surveillance continue comprend une surveillance pendant jusqu'à 50 ans.

12. Procédé de maintien d'un élément structurel creux comprenant au moins un compartiment intérieur fermé **caractérisé par** :
- l'application du procédé de surveillance continue selon les revendications 1 à 11 ;
- la détection d'un changement de pression dans le au moins un compartiment intérieur fermé, qui indique une fuite, choisie parmi une fissure dans le sens de l'épaisseur ou toute autre ouverture ;
- le déclenchement d'une pompe afin de produire un flux de fluide, de préférence un flux de gaz, à travers la fuite ;
- la localisation de la fuite ;
- la réparation de la fuite.

13. Utilisation du procédé selon l'une quelconque des revendications 1 à 11, pour surveiller :
- une unité de traitement ; une centrale électrique ; une tour ; une tour de refroidissement ; une construction de blocage ; toute enceinte ou construction industrielle ; une construction d'immeuble ; un cinéma ; un stade ; un pavillon ; un pont ; une passerelle ; un pont routier ; une voie surélevée ; ou des fondations de ceux-ci ;
- une structure de fondations, des fondations en mer d'éolienne ; une enveloppe extérieure de sous-station ou d'éolienne ; un échafaudage ; une sous-structure ; des fondations ; une base ; un double fond ; une double coque ; un ponton ou une structure de support d'éolienne flottante ; une poutre ; une poutre à membrures parallèles ; un trépied ou un élément de support pour n'importe quel(lle) équipement ou plate-forme industriel(le) ;
- un monopieu en mer, un trépied, une enveloppe extérieure, une sous-structure d'enveloppe extérieure d'éolienne, une tour d'éolienne, une sous-structure de sous-station de transformateur en mer.

14. Appareil de surveillance continue d'une structure de génie civil comprenant un élément structurel creux, l'élément structurel creux comprenant au moins un compartiment intérieur fermé, **caractérisé par** :
- un capteur de pression, adapté pour mesurer une pression de fluide interne dans le au moins un compartiment intérieur fermé, dans lequel le capteur de pression est soit directement relié au compartiment intérieur fermé, soit disposé dans le compartiment fermé, et dans lequel le capteur de pression est configuré pour compenser les changements de température ambiante et/ou les changements de pression ambiante et/ou un choc ;
- une connexion fluidique entre le au moins un compartiment intérieur fermé et le capteur de pression,
- un contrôleur destiné à enregistrer et comparer la pression interne avec une pression établie ou avec une valeur seuil donnée, le contrôleur étant adapté pour détecter une fissure dans le sens de l'épaisseur dans le au moins un compartiment intérieur fermé par un changement de pression de fluide interne,
dans lequel la surveillance continue comprend une surveillance pendant au moins deux semaines.

15. Appareil selon la revendication 14, comprenant en outre :
- un dispositif d'alerte destiné à indiquer une fissure dans le sens de l'épaisseur dans le au moins un compartiment intérieur fermé.

16. Appareil selon les revendications 14 ou 15, comprenant en outre :
- un moyen de fixation destiné à fixer le tube ou le tubage sur l'élément structurel creux.

17. Appareil selon les revendications 14 à 16, dans lequel la structure de génie civil est choisie parmi des structures de génie en mer ou à terre, en particulier parmi : une enveloppe extérieure de sous-station ou d'éolienne ; un échafaudage, une sous-structure, des fondations, une base, un double fond, une double coque, un ponton ou une structure de support d'éolienne flottante, un pont, ou une tour.

18. Appareil selon l'une des revendications 14 à 17, dans lequel un capteur est en connexion fluidique avec au moins deux compartiments intérieurs fermés séparés.

19. Appareil selon la revendication 18, dans lequel les au moins deux compartiments intérieurs fermés sont en connexion fluidique l'un avec l'autre et le capteur est en communication fluidique avec l'un d'entre eux.

20. Appareil selon les revendications 14 à 19, comprenant en outre un moyen de fixation destiné à fixer le tube et/ou le tubage sur l'élément structurel creux, dans lequel la fixation est choisie parmi une fixation sur un intérieur et/ou un extérieur de l'élément structurel creux.

21. Utilisation du procédé selon la revendication 12 pour la détection de fissures dans le sens de l'épaisseur dans une structure de fondations comprenant le au moins un élément structurel creux, **caractérisée par** :
- l'établissement d'une pression de fluide interne dans le compartiment intérieur fermé ;
- la surveillance de la pression de fluide interne pendant au moins deux semaines ;
- la détection d'un changement de pression de fluide interne qui indique une fissure dans le sens de l'épaisseur dans le compartiment intérieur fermé.
